# EUROPÄISCHE PATENTSCHRIFT

(11) **EP 3 140 554 B1**
(45) Veröffentlichungstag und Bekanntmachung des Hinweises auf die Patenterteilung: **24.06.2020**
(21) Anmeldenummer: 15723872.6
(22) Anmeldetag: 07.05.2015
(51) Int. Cl.: F16B 2/08, F16L 33/02

(54) **BEFESTIGUNGSMITTEL, INSBESONDERE FÜR BÄLGE, MIT EINEM INNEREN HINTERSCHNEIDUNGSBEREICH**
FASTENING MEANS, IN PARTICULAR FOR BELLOWS, HAVING AN INNER UNDERCUT REGION
ÉLÉMENT DE FIXATION, EN PARTICULIER POUR SOUFFLETS, PRÉSENTANT UNE ZONE DE CONTREDÉPOUILLE INTÉRIEURE

(30) Priorität: 09.05.2014 DE 102014106599
(43) Veröffentlichungstag der Anmeldung: 15.03.2017
(73) Patentinhaber: GKN Driveline International GmbH, 53797 Lohmar (DE)
(72) Erfinder: DEISINGER, Markus, 53721 Siegburg (DE); SCHUMACHER, Ralf, 50733 Köln (DE); WETTE, Joachim, 53773 Hennef (DE); BALLAS, Daniela, 42859 Remscheid (DE); GEHRKE, Andreas, 53721 Siegburg (DE); WENNING, Ludger, 53819 Neunkirchen-Seelscheid (DE); PFEIFER, Achim, 53721 Siegburg (DE); LEHMANN, Maik, 53819 Seelscheid (DE)
(74) Vertreter: Geskes, Christoph
(86) Internationale Anmeldenummer: PCT/EP2015/060038
(87) Internationale Veröffentlichungsnummer: WO 2015/169893

(56) Entgegenhaltungen:
- EP-A1- 0 802 333
- EP-A1- 1 930 644
- WO-A1-99/39123
- DE-A1- 4 009 259

## Beschreibung

Die vorliegende Erfindung betrifft ein Befestigungsmittel, insbesondere für Bälge, mit einem männlichen und einem hierzu komplementären weiblichen Endabschnitt, wobei im männlichen Endabschnitt ein innerer Hinterschneidungsbereich ausgebildet ist, als auch die Verwendung eines solchen Befestigungsmittels zur Befestigung von Bälgen auf Gelenkgehäusen und/oder Wellen.

Mittel zum Befestigung von Bälgen, insbesondere Faltenbälgen und Rollbälgen, die aus elastomeren Materialien hergestellt sind, sind vielfältig bekannt. So existieren bereits seit langer Zeit sogenannte sich überlappende Spannbänder, die durch Zusammenziehen der beiden freien Bandenden mit geeigneten Mitteln die Spannwirkung erzielen. Im Bereich des Stoßes der freien Bandenden können jedoch Schäden am Faltenbalg entstehen, auch beanspruchen diese einen großen Bauraum. Es sind daher in der Vergangenheit bereits vielfach vorgeschlagen worden sogenannte endlose ringförmig geschlossene Spannringe. Diese werden durch Krimpen, d.h. durch radiales Stauchen mittels geeigneter Werkzeuge, im Durchmesser verkleinert, so dass im Krimpvorgang letztendlich ein sicherer Halt eines Balges auf einem Befestigungskörper, beispielsweise einem Gelenkgehäuse oder einer Welle, erhalten wird.

Um solche endlosen ringförmig geschlossenen Spannringe herzustellen ist es bekannt, von einem endlosen Bandmaterial abgelängte Bandstücke rundzurollen und senkrecht zur Ringmittellinie stumpf miteinander zu verschweißen, eine Technik, die jedoch sehr aufwendig ist. Aus der DE 40 21 746 A1 hingegen ist es bekannt, anstatt einer solchen Schweißung außen- und innenliegende Verschlusslaschen an ersten und zweiten freien Enden eines Bandabschnittes vorzusehen, die komplementär zueinander ausgebildet sind und Hinterschneidungsbereiche aufweisen, so dass bei Zugbelastung der geschlossenen Verbindung auf die außenliegenden Verschlusslaschen nach innen richtende Kräfte einwirken, die eine punktförmige Verbindung der beiden komplementären

Verschlusslaschen ermöglichen. Ein Endbereich kann dabei beispielsweise derart ausgebildet sein, dass ein im Wesentlichen T-förmiges Kopfstück an diesem ausgebildet ist, wohingegen der zweite hierzu komplementäre Endbereich eine dem ersten Endbereich angepasste klauenförmige Gabelung vorsieht, wobei die beiden Endbereich linienförmig aneinander stoßend ineinandergreifen. Dabei können auch mehrere schwalbenschanzförmige oder T-förmige Laschen auf der Ringbreite vorgesehen sein. Derartige, in der DE 40 21 746 A1 beschriebene endlose ringförmig geschlossene Spannringe sind als solche mit einer sogenannten Puzzle-Verriegelung (Puzzle-Lock) bekannt geworden. Nachteilig an den aus der DE 40 21 746 A1 bekannten endlosen Spannring ist jedoch, dass sich diese gelegentlich öffnen können, sei es schon beim Transport zum Abnehmer oder Verwender der geschlossenen endlosen Spannringe, oder sei es in Gebrauch derselben, beispielsweise zum Halten von Faltenbälgen oder Rollbälgen auf Gelenkgehäuseaußenteilen oder Wellen.

DE 40 09 259 A1 offenbart eine Vorrichtung zum Verbinden zweier Kanten von flächigen Teilen, die mindestens entlang eines gemeinsamen Abschnittes im Wesentlichen parallel zueinander verlaufen, wobei an der einen Kante mindestens ein Rückhalteelement angeordnet ist, das eine Aussparung in der anderen Kante in Kantenrichtung formschlüssig hintergreift.

WO 99/39123 A1 offenbart eine Anordnung zum Verbinden zweier Bandkanten, beispielsweise eines Klemmringes oder eines Schrumpfringes, wobei die eine Endkante mindestens einen zungenartigen Vorsprung aufweist, welcher in einer entsprechenden Aussparung in der anderen Kante bzw. im anderen Bandabschnitt eingreift, wobei sich der Vorsprung im Wesentlichen in Bandrichtung in den anderen Bandabschnitt erstreckt und mindestens zwei Abschnitte aufweist, welche in Richtung des Vorsprungs bzw. in Bandlängsrichtung beabstandet sind und welche je quer zur Bandlängsrichtung seitlich vom Vorsprung vorstehend je einen Bereich im anderen Bandabschnitt hintergreifen.

EP 0 802 333 A1 offenbart einen Kompressionsring mit einem im männlichen Abschnitt zungenartig ausgebildeten Teil mit einem vergrößerten Kopfbereich, der durch sich transversal erstreckende Oberflächen, die rechtwinklig zu lateralen Flächen sich erstrecken, definiert ist. Es besteht daher ein Bedarf an Befestigungsmitteln, welche eine verbesserte Schließung der beiden freien Enden eines bandförmigen Abschnittes zur Ausbildung eines endlosen Spannringes aufweisen.

Es ist daher Aufgabe der vorliegenden Anmeldung, ein Befestigungsmittel, insbesondere für Bälge, mit einem männlichen und einem hierzu komplementären weiblichen Endabschnitt als auch dessen Verwendung zur Befestigung von Bälgen auf Gelenkgehäusen und/oder Wellen zur Verfügung zu stellen, welches ein verbessertes Schließverhalten aufweist.

Diese Aufgabe wird erfindungsgemäß gelöst durch ein Befestigungsmittel der eingangs genannten Art, wobei der weibliche Endabschnitt einen Grund umfasst, an welchem ein dort etwa mittig angeordneter Fußabschnitt angeordnet ist, an dem ein Kopfteil angeordnet ist, welches eine Außenkontur des Fußabschnitts seitlich überragt quer zu einer Längsrichtung des Befestigungsmittels gesehen untere Seitenflächen zur Bildung mindestens eines inneren Hinterschneidungsbereichs in einer Ausnehmung des männlichen Endabschnittes umfasst, wobei beidseitig des Fußabschnittes je ein äußerer Längsabschnitt angeordnet ist, dessen Außenwandung bündig in eine Außenwandung des Befestigungsmittels übergeht, und wobei das Kopfteil von den beiden äußeren Längsabschnitten in einer Längsrichtung des Befestigungsmittels überragt ist.

Das erfindungsgemäße Befestigungsmittel ist sowohl hinsichtlich statischer als auch dynamischer Belastung gegenüber solchen aus dem Stand der Technik verbessert. Ursächlich hierfür ist die Vorsehung des im weiblichen Endabschnitts mit in etwa mittig angeordnetem Fußabschnitt mit dem Kopfteil, welches in den hierzu komplementär ausgebildeten männlichen Endabschnitt eingreifbar ist. Dort ist eine entsprechende Ausnehmung vorgesehen, durch welche im männlichen Endabschnitt ein innerer Hinterschneidungsbereich ausgebildet ist. Neben dem inneren Hinterschneidungsbereich weist der männliche Endabschnitt mindestens einen (ersten) äußeren bzw. transversalen Hinterschneidungsbereich auf. Ein im Sinne der vorliegenden Erfindung weiblicher Endabschnitt beschreibt einen solchen, der einen männlichen Endabschnitt aufnimmt und überwiegend seitlich umfasst.

Soweit in der vorliegenden Erfindung von einem inneren Hinterschneidungsbereich die Rede ist, ist hiermit ein Hinterschneidungsbereich gemeint, welcher ausschließlich durch die Ausbildungen der männlichen und weiblichen Endabschnitte gebildet ist, und weder eine direkte transversale noch eine direkte longitudinale Hinterschneidung in Bezug auf eine Außenwandung des Befestigungsmittels aufweist. Transversal bedeutet in diesem Sinne, dass Hinterschneidungen quer zu einer Längsrichtung des Befestigungsmittels ausgebildet sind, wobei der Begriff "quer" hier umfasst nicht nur in einem rechten Winkel zu der Außenwandung des Befestigungsmittels verlaufende transversale Hinterschneidungen, sondern auch solche, die winklig in Bezug zu der Außenwandung des Befestigungsmittels verlaufen. Longitudinal bedeutet in diesem Zusammenhang, dass Hinterschneidungen in Längsrichtung des Befestigungsmittels verlaufen, wobei "Längsrichtung" bedeutet, dass diese sowohl in etwa parallel zu der Außenwandung des Befestigungsmittels, als auch winklig zu dieser verlaufen können. Der innere Hinterschneidungsbereich weist ebenfalls transversale Hinterschneidungen auf, die jedoch in Ausnehmungen des weiblichen und/oder des männlichen Endabschnitts gebildet sind und daher keinen Bezug zu der Außenwandung des Befestigungsmittels aufweisen.

Für einen innenliegenden Hinterschneidungsbereich ist es stets notwendig, dass mindestens eine Ausnehmung in einem Mittel, angeordnet im männlichen oder weiblichen Endabschnitt, vorgesehen ist, in die ein komplementär ausgebildetes Mittel des weiblichen bzw. männlichen Endabschnittes eingreifbar ist. Im Sinne der vorliegenden Erfindung kann auch mehr als ein innerer Hinterschneidungsbereich vorgesehen sein, beispielsweise zwei oder drei.

Der männliche Endabschnitt lässt sich als mit einem zungenartigen Vorsprung, in etwa mittig an einem Grund des männlichen Endabschnitts angeordnet, versehen ansprechen. Dieser weist zumindest ein erstes Fußteil und mindestens ein Kopfteil auf, wobei das Kopfteil im Falle des männlichen Endabschnitts erste und zweite Aufweitungen aufweist, die eine Außenkontur des jeweiligen Fußteils überragen. Die erfindungsgemäße Ausbildung des weiblichen Endabschnitts mit einem inneren Hinterschneidungsbereich lässt sich auch als pilzförmig oder ähnlich in Bezug auf den Fußabschnitt mit Kopfteil ansprechen, oder aber ebenfalls als zungenartig. Allerdings beträgt die Erstreckung dieser Zunge oder dieses Pilzkopfes in Längsrichtung des Befestigungsmittels maximal etwa 50 % derjenigen des zungenartigen Vorsprungs des männlichen Endabschnitts, bevorzugt zwischen etwa 15 % und etwa 42 %. Der bevorzugt etwa mittig im weiblichen Endabschnitt angeordnete Fußabschnitt mit Kopfteil kann als an dem Grund des weiblichen Endabschnitts angeordneter, insbesondere pilzkopfförmiger, Vorsprung angesprochen werden. Dieser ist bevorzugt auf beiden Seiten benachbart von Längsabschnitten des weiblichen Endabschnitts am Grund angeordnet. Er kann die Längsabschnitte in Längsrichtung des Befestigungsmittels überragen oder innerhalb eines von diesen definierten Raumes angeordnet sein. Bevorzugt ist der pilzkopfförmige Vorsprung des weiblichen Endabschnitts innerhalb des männlichen Endabschnitts in einer Ausnehmung desselben im geschlossen Zustand des Befestigungsmittels angeordnet bzw. dort anordbar ausgebildet. Eine Außenkontur des pilzkopfförmigen Vorsprungs des weiblichen Endabschnitts entspricht im Wesentlichen, bis auf ggf. vorgesehene Überschneidungen in Randbereichen für eine bessere Verbindung bei Schließung, einer Innerkontur des männlichen Endabschnitts. Eine Ausnehmung des männlichen Endabschnitts ist in einem Mittel zur Bildung eines inneren Hinterschneidungsbereiches angeordnet, bevorzugt in einem dort angeordneten Kopfteil. Das Mittel zur Bildung eines inneren Hinterschneidungsbereichs am männlichen Endabschnitt weist bevorzugt ein Fußteil auf, welches das Kopfteil mit der Ausnehmung trägt. Das Kopfteil überragt bevorzugt das Fußteil unter Ausbildung von zwei Aufweitungsteilen. Zwischen diesen ist bevorzugt die Ausnehmung angeordnet.

Unter äußeren Hinterschneidungsbereichen, von welchen ein, zwei, drei, vier oder mehr vorliegen können, im Sinne der vorliegenden Erfindung werden solche Bereiche verstanden, welche bezogen auf den männlichen Endabschnitt solche Hinterschneidungen sind, die transversal oder longitudinal direkt bezogen sind auf die Außenwandung des Befestigungsmittels.

Soweit in der vorliegenden Erfindung von einem inneren Hinterschneidungsbereich und mindestens einem ersten äußeren (transversalen) Hinterschneidungsbereich die Rede ist, sind Hinterschneidungsbereiche gemeint, die transversale Hinterschneidungen aufweisen. Die transversalen Hinterschneidungen sind aus linearen und gekrümmten Abschnitten gebildet, oftmals mit unterschiedlichen Radien. Der innere und der mindestens eine äußere Hinterschneidungsbereich erstrecken sich in Längsrichtung des Befestigungsmittels gesehen vorzugsweise zwischen minimalen Breiten, bezogen auf die jeweiligen Hinterschneidungsbereiche, der im männlichen und weiblichen Endabschnitt einander zugeordneten Mittel. Beispielsweise erstreckt sich der innere Hinterschneidungsbereich ausgehend von einer minimalen Breite b₃ des Fußabschnittes des weiblichen Endabschnittes bis zu minimalen Breiten b₆₁ bzw. b₆₂ der beiden Aufweitungsteilen des Kopfteils des männlichen Endabschnitts. Beispielsweise erstreckt sich ein erster äußerer, transversaler Hinterschneidungsbereich des männlichen Endabschnitts in etwa zwischen einem Bereich minimaler Breite b₁ eines ersten Fußabschnitts, der an einem Grund des männlichen Endabschnitts angeordnet ist, bis zu etwa zu einer minimalen Breite b₂₁ und b₂₂ zweier Längsabschnitte des komplementären weiblichen Endabschnitts, angeordnet beidseitig des mittig am Grund angeordneten Fußabschnitts des weiblichen Endabschnitts, der dort beispielsweise einen ersten äußeren, transversalen Hinterschneidungsbereich aufweist. In diesem Beispiel liegt genau ein erster äußerer Hinterschneidungsbereich vor. Das Ende des weiblichen Endabschnitts ist dem Grund des männlichen Endabschnitts im geschlossen Zustand zugeordnet bzw. grenzt unmittelbar an diesen. Ist nur ein transversaler (äußerer) Hinterschneidungsbereich im männlichen und weiblichen Endabschnitt vorgesehen, mithin jeweils nur ein Erster, so sind diese im geschlossenen Zustand des Befestigungsmittels einander zugeordnet. Sind hingegen mehr als ein transversaler männlicher und weiblicher Hinterschneidungsbereich vorgesehen, so sind diese nicht einander zugeordnet. Beispielsweise ist dann der erste männliche transversale (äußere) Hinterschneidungsbereich dem zweiten weiblichen transversalen (äußeren) Hinterschneidungsbereich zugeordnet. Die Anzahl männlicher und weiblicher transversaler (äußerer) Hinterschneidungsbereiche ist identisch. Das erfindungsgemäße Befestigungsmittel weist bevorzugt genau einen inneren Hinterschneidungsbereich und eine äußeren, transversalen Hinterschneidungsbereich auf. Diese sind bevorzugt durch die Mittel zur Bildung eines inneren Hinterschneidungsbereiches ausgebildet.

Das erfindungsgemäße Befestigungsmittel ist vorzugsweise bandförmig ausgebildet. In dieser Form wird es produziert und anschließend zu einem geschlossenen Ring gebogen. In einer bevorzugten Ausführungsform ist daher das beanspruchte Befestigungsmittel zu einem geschlossenen Ring schließbar, und insbesondere als geschlossener Ring ausgebildet, wobei die komplementären männlichen und weiblichen Endabschnitte miteinander verbunden sind. Es kann dabei vorteilhafterweise vorgesehen sein, dass der männliche oder weibliche Endabschnitt Materialüberschneidungen, insbesondere in den jeweiligen Kopfteilen, aber auch im Fußteil, aufweisen können, wobei mit Überschneidungen Materialüberschneidungen gemeint sind, so dass bei einem Schließen des bandförmigen Befestigungsmittels zu einem geschlossenen Ring in diesen Bereichen Verschmiedungen durch Materialüberlagerungen auftreten. Hierdurch kann in Bereichen, in welchen bei einer sehr starken Beanspruchung des Befestigungsmittels im Gebrauch grundsätzlich Spalte bildbar sind, dieser Spaltbildung vorgebeugt werden, so dass die Lebensdauer des als geschlossener Ring ausgebildeten Befestigungsmittels im Befestigungszustand verlängert ist.

Durch das Biegen des bandförmigen Befestigungsmittels zu einem geschlossenen Ring und ebenso durch das Krimpen zur Befestigung beispielsweise eines Balges mit dem erfindungsgemäßen Befestigungsmittel, treten Verschmiedungen und/oder sonstige Verformungen des männlichen und weiblichen Endabschnittes auf. Soweit daher in der vorliegenden Erfindung Bezug genommen wird auf geometrische Werte oder Wertebereiche wie beispielsweise Winkel oder Radien oder werthaltige Begriff wie parallel oder ähnlichen, sind diese bezogen auf das bandförmig ausgebildete, d.h. nicht geschlossene Befestigungsmittel. Die minimalen Breiten hingegen bleiben zumeist in einem geschlossenen und gekrimpten erfindungsgemäßen Befestigungsmittel in etwa erhalten.

Soweit in der vorliegenden Erfindung der Begriff "in etwa" verwendet wird in Bezug auf konkrete Werte, werthaltige Begriffe wie parallel etc. oder Wertebereiche, so sind hierunter solche Abweichung zu verstehen, die der angesprochene Fachmann als im Bereich des fachmännisch üblichen ansieht, insbesondere Abweichungen von +/- 10 %, bevorzugt +/- 5 % der jeweiligen Werte oder werthaltige Begriff.

In einer Finite-Elemente-Analyse hat sich gezeigt, dass das erfindungsgemäße Befestigungsmittel aufgrund der Ausbildung eines inneren Hinterschneidungsbereichs in einer in einem Mittel des männlichen Endabschnitts angeordneten Ausnehmung nicht nur hervorragende Werte für die statische Zugdehnung, sondern auch für die dynamische Zug-Biegedehnung aufweist. Zudem konnte durch Finite-Elemente-Methoden gezeigt werden, dass für eine statische Spaltöffnung, bestimmt in einem Belastungs-Zwischenschritt bei der Montage des Binders, das erfindungsgemäße Befestigungsmittel sehr gute Werte liefert. Für sämtliche der genannten Größen, die normiert durch Finite-Elemente-Methoden bestimmt werden, konnten Werte unter 100 %, und bevorzugt unter 80 %, ermittelt werden. Dies bedeutet, dass nur ausgesprochen geringe Spaltöffnungen in Gebrauch oder bei Auslieferung nach Herstellung des geschlossenen ringförmigen Befestigungsmittels, in aller Regel auch ein System mit einem Balg, erfolgen werden. Insbesondere liegen die Werte für die dynamische Zug-Biegedehnung vorzugsweise bei maximal etwa 80 %, bevorzugt maximal etwa 75 %, bevorzugt in einem Bereich von etwa 20 % bis etwa 80 %, und damit bei Werten, die deutlich unterhalb denjenigen Werten liegen von Puzzle-Verbindungen nach dem Stand der Technik, ebenfalls bestimmt durch Finite-Elemente-Methoden und normiert, deren Werte hierfür oftmals deutlich über 100 % liegen.

In einer bevorzugten Ausführungsform ist der Fußabschnitt des weiblichen Endabschnitts ausgehend vom Grund desselben sich verjüngend bis zu einer minimalen Breite b₃ ausgebildet. Weiter bevorzugt liegt ein Übergangswinkel β zwischen Grund und Fußabschnitt in einem Bereich von etwa 91 ° bis etwa 110°, bevorzugt in einem Bereich von etwa 93° bis etwa 108°. Weiter bevorzugt sind zwischen Seitenflächen des Fußabschnitts und den unteren Seitenflächen des Kopfteils des weiblichen Endabschnitts radiale Bereiche mit Kerbradien von mindestens etwa 0,3 mm angeordnet, weiter bevorzugt Kerbradien von mindestens etwa 0,5 mm, und weiter bevorzugt Kerbradien in einem Bereich von etwa 0,3 mm bis etwa 0,9 mm. Besonders bevorzugt sind in den genannten radialen Bereichen unterschiedliche Kerbradien vorgesehen. Besonders bevorzugt werden dabei im Bereich minimaler Breiten, wie beispielsweise der minimalen Breite des Fußabschnitts des weiblichen Endabschnitts, Radien von etwa 0,7 mm bis etwa 0,9 mm, bevorzugt etwa 0,8 mm bis etwa 0,9, mm eingesetzt, an welche sich dann ein Minimalradius in einem Bereich von etwa 0,3 mm bis etwa 0,4, mm, anschließen kann. Die genannten Minimalradien, welche bevorzugt in einem Bereich von etwa 0,25 mm bis etwa 0,5 mm, weiter bevorzugt in einem Bereich von etwa 0,3 mm bis etwa 0,4 mm, liegen, dienen dazu, möglichst viele Funktionen wie Hinterschneidungen oder lasttragende Querschnittsflächen des erfindungsgemäßen Befestigungsteils auf dem verfügbaren engen Raum zur Verfügung zu stellen. Eine übliche Breite b eines erfindungsgemäßen Befestigungsmittels liegt in einem Bereich von etwa 8 mm bis etwa 20 mm, bevorzugt etwa 9 mm bis etwa 13 mm. Im Bereich der minimalen Breiten werden diese Minimalradien jedoch nicht eingesetzt, da ansonsten dort stärkere Kerbwirkungen auftreten würden. Erst wenn durch einen größeren Radius, insbesondere einem solchen in einem Bereich von etwa 0,7 mm bis etwa 0,9 mm, eine Querschnittsverbreiterung von mindestens 0,1 mm erfolgt, sollte hieran anschließend ein Minimalradius vorgesehen werden. Im Bereich eines kritischen, das heißt minimalen Querschnitts beziehungsweise Breite des männlichen oder weiblichen Endabschnitts, zum Beispiel einer minimalen Breite der Fußabschnitte, werden vorzugsweise größtmögliche Kerbradien in einem Bereich von etwa 0,4 mm bis etwa 1 mm, weiter bevorzugt bis etwa 0,9 mm eingesetzt. Der Übergang von einem Minimalradius zu einem größeren Radius oder umgekehrt erfolgt erfindungsgemäß stets tangential stetig. Die genannten lokalen Krümmungsradien werden vorteilhafterweise ermittelt durch Vergleich beim Anschmiegen von verschiedenen bekannten Radien.

Vorteilhafterweise sind Seitenflächen des Kopfteils des weiblichen Endabschnitts zumindest teilweise, bevorzugt vollständig gekrümmt ausgebildet mit Kerbradien von mindestens etwa 0,3 mm, bevorzugt von mindestens etwa 0,5 mm, weiter bevorzugt mit Kerbradien in einem Bereich von etwa 0,3 mm bis etwa 0,9 mm. Auch hier können, wie vorstehend beschrieben, unterschiedliche Radien aneinander anschließen. Vorteilhafterweise ist eine Kopfseitenfläche des Kopfteils in mindestens einem Teilbereich etwa parallel zu dem Grund des weiblichen Endabschnitts ausgebildet. Besonders bevorzugt gehen die Seitenflächen des Kopfteils mit radialen Bereichen mit Kerbradien von mindestens etwa 0,5 mm, bevorzugt mindestens etwa 0,7 mm, besonders bevorzugt in einem Bereich von etwa 0,7 mm bis etwa 0,9 mm, in die Kopfseitenfläche des Kopfteils über. Dabei kann nachfolgend dem radialen Bereich ein linearer Bereich ohne jede Krümmung vorgesehen sein.

Erfindungsgemäß ist beidseitig des Fußabschnitts des weiblichen Endabschnitts je ein äußerer Längsabschnitt angeordnet, dessen Außenwandung bündig in die Außenwandung des Befestigungsmittels übergeht. Die Längsabschnitte können in ihrem dem männlichen Endabschnitt zuordbaren Ende Aussparungen aufweisen, in welchen Verlängerungsabschnitte des männlichen Endabschnitts anordbar sind. Hierdurch werden zusätzliche longitudinale Hinterschneidungen zur Verfügung gestellt, welche im Fall einer Biegebeanspruchung die Gefahr eines Öffnens einer Verbindung zwischen männlichem und weiblichem Endabschnitt in einem geschlossenen erfindungsgemäßen Befestigungsmittel weiter vermindern. Erfindungsgemäß ist das Kopfteil des weiblichen Endabschnitts von den beiden äußeren Längsabschnitten in einer Längsrichtung des Befestigungsmittels überragt.

In einer bevorzugten Ausführungsform des erfindungsgemäßen Befestigungsmittels umfasst der männliche Endabschnitt neben dem mindestens einen inneren Hinterschneidungsbereich mindestens einen äußeren Hinterschneidungsbereich. Dabei kann auch vorgesehen sein, dass mindestens zwei oder drei oder mehr Hinterschneidungsbereiche, bevorzugt jedoch ein erster oder ein erster und ein zweiter oder ein erster, zweiter und ein dritter äußerer Hinterschneidungsbereich vorgesehen sind. Die weiblichen Hinterschneidungsbereiche sind dabei komplementär zu den äußeren Hinterschneidungsbereichen des männlichen Endabschnitts ausgebildet, so dass der weibliche Endabschnitt einen ersten oder einen ersten und einen zweiten oder einen ersten, zweiten oder dritten (weiblichen) Hinterschneidungsbereich umfasst. Besonders bevorzugt weist das erfindungsgemäße Befestigungsmittel einen inneren Hinterschneidungsbereich und einen ersten oder einen ersten und einen zweiten Hinterschneidungsbereich auf. Vorteilhafterweise umfasst der männliche Endabschnitt einen Fußabschnitt, der ausgehend von einem Grund sich verjüngend bis zu einer minimalen Breite b₁ ausgebildet ist. Vorteilhaferweise liegt ein Übergangswinkel γ (gamma) zwischen dem Grund und dem Fußabschnitt des männlichen Endabschnittes in einem Bereich von etwa 90,5° bis etwa 110°, weiter bevorzugt in einem Bereich von etwa 93° bis etwa 106°.

In einer weiter bevorzugten Ausführungsform ist am vom Grund wegweisenden Ende des Fußabschnitts des männlichen Endabschnitts ein Kopfteil von Aufweitungsteilen angeordnet, die den inneren Hinterschneidungsbereich ausbilden, insbesondere indem sie eine Ausnehmung für Fußteil mit Kopfteil des weiblichen Endabschnitts ausbilden.

Die Aufweitungsteile umfassen Querseitenflächen zur Ausbildung des mindestens einen äußeren Hinterschneidungsbereichs. Die Querseitenflächen bilden mit Längsseitenflächen des Fußabschnitts des männlichen Endabschnitts einen spitzen Winkel W in einem Bereich von etwa 45° bis etwa 88°, bevorzugt in einem Bereich von etwa 68° bis etwa 88°, weiter bevorzugt in einem Bereich von etwa 75° bis etwa 86°. Weiter bevorzugt beträgt der spitze Winkel W 80°+ 5°, was bedeutet, dass ein spitzer Winkel W von 80° bevorzugt ist, er aber eine Produktionstoleranz von +5° aufweisen kann.

Vorteilhafterweise sind im Bereich zwischen Längsseitenflächen des Fußabschnitts und Querseitenflächen der Aufweitungsteile des männlichen Endabschnitts Kerbradien von mindestens etwa 0,3 mm, bevorzugt mindestens etwa 0,5 mm, und weiter bevorzugt besonders in einem Bereich von etwa 0,3 mm bis etwa 0,9 mm, angeordnet. Auch hier kann vorteilhafterweise vorgesehen sein, dass unterschiedliche Radien eingesetzt werden, wobei im Bereich der minimalen Breite b₁ des Fußabschnitts des männlichen Endabschnitts vorteilhafterweise größere Kerbradien in einem Bereich von etwa 0,7 mm bis etwa 0,9 mm vorgesehen sind, an welche sich minimale Radien in einem Bereich von etwa 0,25 mm bis etwa 0,5 mm, bevorzugt in einem Bereich von etwa 0,3 mm bis etwa 0,4 mm, anschließen.

Vorteilhafterweise sind Seitenflächen der Aufweitungsteile in etwa parallel zu der Außenwandung des Befestigungsmittels ausgebildet. Es kann hier jedoch auch vorgesehen sein, dass die Seitenflächen leicht gewinkelt zu der Außenwandung des Befestigungsmittels ausgebildet sind, d.h. insbesondere vorteilhafterweise der Kopfteil des männlichen Endabschnittes in Längsrichtung des Befestigungsmittels gesehen etwas sich verjüngend ausgebildet ist. Die Abweichungen von einer parallelen Ausrichtung liegen dabei vorzugsweise in einem Bereich von etwa +/- 10°, weiter bevorzugt in einem Bereich von etwa +/- 5°. Die Seitenflächen der Aufweitungsteile können nicht nur linear, was bevorzugt ist, sondern auch sonstwie ausgebildet sein, insbesondere gekrümmte Bereiche aufweisen, die Ausbuchtungen oder Einbuchtungen in den Aufweitungsteile des Kopfteils des männlichen Endabschnitts bilden. Der Übergang zwischen den Seitenflächen der Aufweitungsteilen des Kopfteils des männlichen Endabschnitts und den jeweiligen Kopfseitenflächen derselben, die dem Grund des weiblichen Endabschnitts zuordbar sind, erfolgt vorzugsweise rechtwinklig. Aufgrund produktionstechnischer Fertigungsgrenzen können hier jedoch auch minimale Kerbradien von bis zu 0,3 mm vorliegen. Diese lassen sich produktionstechnisch nicht vermeiden.

Weiter bevorzugt ist zwischen den Aufweitungsteilen eine Ausnehmung ausgebildet, die komplementär zu dem am Grund des weiblichen Endabschnitts angeordneten Fußabschnitt mit Kopfteil ausgebildet ist. Die Ausnehmung lässt sich als in etwa pilzkopfartig beschreiben. Hierdurch erhält das im männlichen Endabschnitt angeordnete Mittel, umfassend Fußteil und Kopfteil mit den beiden Aufweitungsteilen und der Ausnehmung, ein in etwa hirschkäferartiges Erscheinungsbild. Bei Vorsehung von mehr als einem inneren Hinterschneidungsbereich können dann zum Beispiel baumartige Konturen eingesetzt werden.

In einer weiter bevorzugten Ausführungsform ist eine Länge l des Fußabschnitts und des Kopfteils mit den Aufweitungsteilen des männlichen Endabschnittes kürzer als eine Breite b des Befestigungsmittels. Vorzugsweise beträgt die Länge l etwa 70 % bis etwa 98 %, bevorzugt etwa 78 % bis etwa 95 %, der Breite b des Befestigungsmittels.

In einer besonders bevorzugten Ausführungsform sind minimale Breiten b₂₁ und b₂₂ beider äußerer Längsabschnitte und die minimale Breite b₃ des Fußabschnitts des weiblichen Endabschnitts derart gewählt, dass diese zu der minimalen Breite b₁ des Fußabschnitts des männlichen Endabschnitts in einem Verhältnis b₁: (b₂₁ + b₂₂+b₃) von etwa 0,79 bis etwa 1,27, bevorzugt etwa 0,85 bis etwa 1,18, weiter bevorzugt etwa 0,95 bis etwa 1,05, stehen. Dieses Verhältnis hat sich als wesentlich bei der Berechnung mittels Finite-Elemente-Analyse erwiesen, um in Hinblick auf auftretende Zugspannungen beste Werte zu liefern. Grundsätzlich werden systematisch die Verhältnisse der minimalen Breiten (Querschnittsbreitenverhältnisse) des männlichen und des weiblichen Endabschnitts gebildet auf einer ersten männlichen und einer ersten weiblichen Stufe, beziehungsweise einer zweiten männlichen und einer zweiten weiblichen Stufe, beziehungsweise einer dritten männlichen und einer dritten weiblichen Stufe, etc., in Bezug auf die ersten oder ersten und zweiten oder ersten und zweiten und dritten äußeren Hinterschneidungsbereiche. Die Querschnittsbreitenverhältnisse aller Stufen liegen erfindungsgemäß in den vorgenannten bevorzugten Bereichen

Die vorliegende Erfindung betrifft weiterhin die Verwendung des erfindungsgemäßen Befestigungsmittels zur Befestigung von Bälgen auf Gelenkgehäusen, insbesondere auf Gelenkgehäuseaußenteilen und/oder Wellen, insbesondere von Automobilen, insbesondere von Gleichlaufgelenken. Aus Balg und Befestigungsmittel ist ein System gebildet, welches die Befestigung von Bälgen ermöglicht. Insbesondere weist dieses System einen Faltenbalg und/oder einen Rollbalg auf.

Diese und weitere Vorteile der vorliegenden Erfindung werden anhand der nachfolgenden Figuren näher erläutert. Es zeigen:
- Fig. 1:: eine Draufsicht auf ein bandförmiges erfindungsgemäßes Befestigungsmittel in einer ersten Ausführungsform;
- Fig. 2a:: einen männlichen Endabschnitt des Befestigungsmittels gemäß Fig. 1;
- Fig. 2b:: einen weiblichen Endabschnitt des Befestigungsmittels gemäß Fig. 1;
- Fig. 3:: das Befestigungsmittel gemäß den Fig. 1 bis 3 im geschlossenen ringförmigen Zustand in einer perspektivischen Ansicht;
- Fig. 4:: eine Draufsicht auf ein geschlossenes ringförmiges Befestigungsmittel in einer zweiten Ausführungsform;
- Fig. 5:: eine Einzelheit Y der zweiten Ausführungsform gemäß Fig. 4; und
- Fig. 6:: eine dritte Ausführungsform des erfindungsgemäßen Befestigungsmittels.

Zunächst sei vorausgeschickt, dass die in den Figuren dargestellten Ausgestaltungen des erfindungsgemäßen Befestigungsmittels nicht einschränkend auszulegen sind, es können beispielsweise auch zwei oder mehr Fußabschnitte mit Kopfteil und Aufweitungsteilen im Falle des männlichen Endabschnittes am Grund der weiblichen und männlichen Endabschnitte angeordnet sein. Es können die in den Figuren beschriebenen Merkmale zur weiteren Ausgestaltung mit denen in der Beschreibung oben angegebenen Merkmalen kombiniert werden. Des Weiteren sei darauf hingewiesen, dass die in der Figurenbeschreibung angegebenen Bezugszeichen den Schutzbereich der vorliegenden Erfindung nicht beschränken, sondern lediglich auf die in den Figuren gezeigten Ausführungsbeispiele verweisen. Gleiche Teile oder Teile mit gleicher Funktion weisen im Folgenden, soweit nicht ausdrücklich anders erwähnt, die gleichen Bezugszeichen auf.

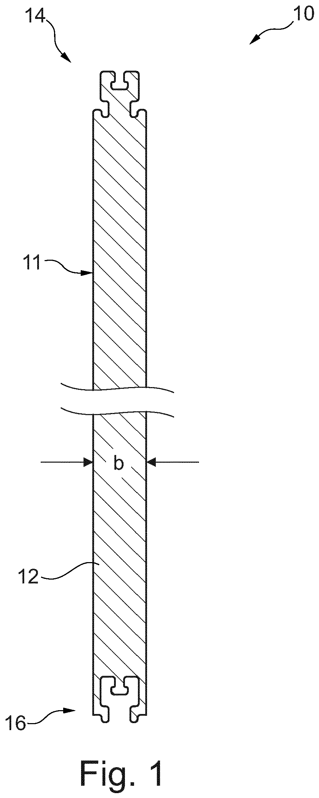

Fig. 1 zeigt in Draufsicht eine erste Ausführungsform des erfindungsgemäßen Befestigungsmittels 10, welches bandförmig, d.h. in nicht geschlossenem Zustand, vorliegt. Das Befestigungsmittel 10 weist einen männlichen Endabschnitt 14 und einen weiblichen Endabschnitt 16 auf, zwischen denen ein Bandabschnitt 12 angeordnet ist. Das Befestigungsmittel 10 weist auf beiden Seiten eine Außenwandung 11 auf.

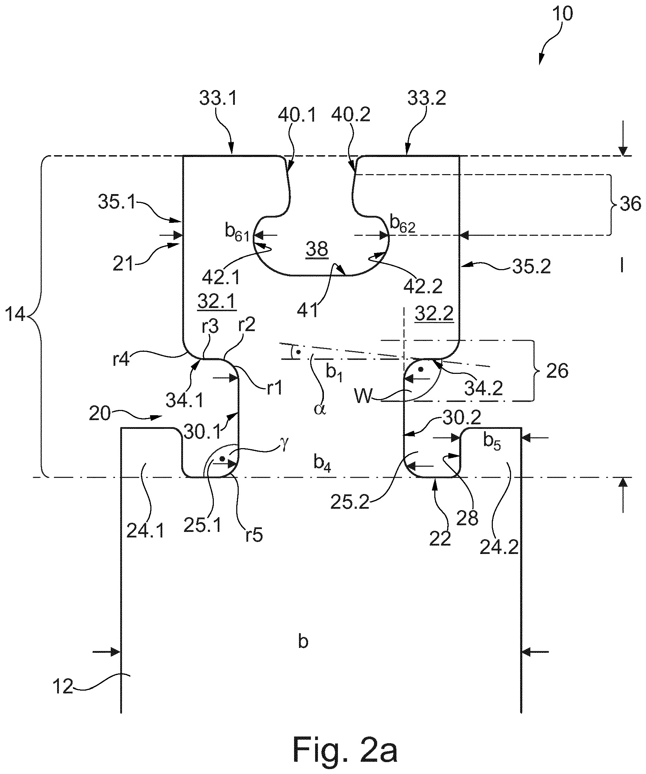

Fig. 2a zeigt den männlichen Endabschnitt 14 des Befestigungselementes 10 gemäß Fig. 1 in der ersten Ausführungsform. Eine Breite b, bestimmt zwischen den Außenwandungen 11, des Befestigungsmittels 10 bzw. Bandabschnitts 12, ist dabei größer als eine Länge l des männlichen Endabschnitts, gemessen zwischen einem Grund 22 und Kopfseitenflächen 33.1 und 33.2. Die Länge l beträgt dabei etwa 80 % der Breite b.

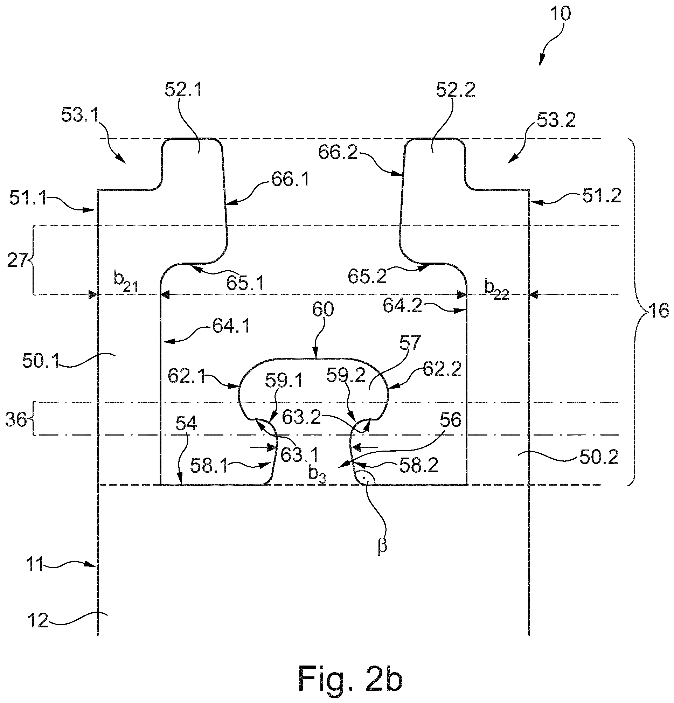

Der männliche Endabschnitt 14 weist einen Fußabschnitt 20 und einen Kopfteil 21 auf. Das Kopfteil 21 weist zwei Aufweitungsteile 32.1 und 32.2 auf, welche eine Außenkontur des Fußteils 20 seitlich überragen. Das Fußteil 20 weist Längsseitenflächen 30.1, 30.2 auf, wobei zwischen dem Grund 22 und den Längsseitenflächen 30.1 und 30.2 ein stumpfer Winkel γ (gamma) gebildet ist mit etwa 93°. Im Bereich des Übergangs vom Grund 22 in die Längsseitenflächen 30.1 und 30.2 ist ein Kerbradius r₅ von etwa 0,3 mm vorgesehen. Das Fußteil 20 ist sich verjüngend bis zu einer minimalen Breite b₁ ausgebildet. Nachfolgend dieser minimalen Breite b₁ ist ein erster Kerbradius r₁ mit einem Wert von 0,8 mm vorgesehen, der tangential stetig in einen Kerbradius r₂ von 0,3 mm übergeht. Diese Kerbradien r₁ und r₂ stellen den Übergang von den Längsseitenflächen 30.1 und 30.2 des Fußabschnitts 20 in Querseitenflächen 34.1 und 34.2, die in einem ersten und einzigen äußeren Hinterschneidungsbereich 26 angeordnet sind, der Aufweitungsteile 32.1 und 32.2 dar. Diese gehen dann in Seitenflächen 35.1 und 35.2 der Aufweitungsteile 32.1 und 32.2 über mit einem minimalen Kerbradius r₃ von 0,3 mm und daran anschließend tangential stetig einem Kerbradius r₄ von 0,8 mm. Die Seitenflächen 35.1 und 35.2 sind nicht parallel verlaufend zu der Außenwandung 11 des Befestigungsmittels 10 ausgebildet, sondern in einem Winkel von etwa 3° zu dieser, wodurch die Aufweitungsteile 32.1 und 32.2 in Richtung auf Kopfseitenflächen 33.1 und 33.2 derselben, die dem weiblichen Endabschnitt 16 zuordenbar sind, etwas verjüngend ausgebildet sind. Hierdurch wird nachfolgend dem Kerbradius r₄ ein Bereich minimaler Breite b₂ im komplementär ausgebildeten weiblichen Abschnitt 16 zur Verfügung gestellt, wie dieser Fig. 2b weiter unten entnehmbar ist. Im männlichen Endabschnitt 14 weist der Fußabschnitt 20 am Grund 22 eine größere Breite b₄ auf als im Bereich minimaler Breite b₁.

Der Übergang zwischen den Längsseitenflächen 35.1 und 35.2 der Aufweitungsteile 32.1 und 32.2 in die Kopfseitenflächen 33.1 und 33.2 verläuft im Wesentlichen rechtwinklig. Aufgrund von Produktionstoleranzen können dort jedoch Kerbradien von bis zu 0,3 mm vorliegen.

Die Querseitenflächen 34.1 und 34.2 der Aufweitungteile 32.1 und 32.2 sind in einem spitzen Winkel W mit den Längsseitenflächen 30.1 und 30.2 des Fußabschnittes 20 von 85° ausgebildet.

Der Kopfteil 21 des männlichen Endabschnitts 14 weist eine pilzkopfförmige Ausnehmung 38 zur Bildung eines inneren Hinterschneidungsbereichs 36 auf, welche ausgehend von den Kopfseitenflächen 33.1 und 33.2 der Aufweitungsteile 32.1 und 32.2 ausgebildet ist. Die Kopfseitenflächen 33.1 und 33.2 gehen dabei über in innenliegende Längsseitenflächen 40.1 und 40.2 zur Ausbildung einer Art Pilzfuß der pilzkopfförmigen Ausnehmung 38. Der Pilzkopf der pilzkopfförmigen Ausnehmung 38 weist dabei eine Basisseitenfläche 41 auf, welche teilweise linear und parallel zum Grund 22 ausgebildet ist und in gekrümmte innenliegende Seitenflächen 42.1 und 42.2 ohne jegliche lineare Abschnitte übergeht, so dass letztendlich ein Pilzkopf gebildet ist. Im Bereich der pilzkopfförmigen Ausnehmung 38 sind minimale Breiten b₆₁ und b₆₂ der Aufweitungsteile 32.1 und 32.2 bestimmbar.

Fig. 2b zeigt den weiblichen Endabschnitt 16 des Befestigungsmittels 10, in welchem der einzige und hier in Hinblick auf die komplementäre Ausbildung zum männlichen Endabschnitt 14 ebenso benannte äußere Hinterschneidungsbereich 27 und der innere Hinterschneidungsbereich 36 kenntlich gemacht sind. Der äußere Hinterschneidungsbereich 26 beziehungsweise 27 erstreckt sich von der minimalen Breite b₁ des Fußabschnitts 20 des männlichen Endabschnitts 14 bis zur minimalen Breite b₂₁ beziehungsweise b₂₂ von Längsabschnitten 50.1 und 50.2 des weiblichen Endabschnitts 16. Der innenliegende Hinterschneidungsbereich 36 erstreckt sich von einer minimalen Breite b₃ eines Fußabschnitts 56 des weiblichen Endabschnitts 16 bis zu den minimalen Breiten b₆₁ und b₆₂ der Aufweitungsteile 32.1 und 32.2 des männlichen Endabschnitts 14. Ausgehend von einem Grund 54 des Endabschnitts 16 ist in etwa mittig ein Fußabschnitt 56 angeordnet mit einem Kopfteil 57. Der Fußabschnitt 56 weist eine minimale Breite b₃ auf. Längsseitenflächen 58.1 und 58.2 des Längsabschnitts 56 gehen in einem stumpfen Winkel β von etwa 95° in den Grund 54 über. Der Fußabschnitt 56 ist damit verjüngend sich auf das Kopfteil 57 hin ausgebildet. An die Längsseitenflächen 58.1 und 58.2 des Längsabschnittes schließen sich untere Querseitenflächen 63.1 und 63.2 an, welche zumindest teilweise parallel zum Grund 54 ausgebildet sind und in gekrümmte Seitenflächen 62.1 und 62.2 übergehen, welche wiederum in eine Kopfseitenfläche 60, die in einem mittigen Teilbereich in etwa parallel zum Grund 54 ausgebildet ist, übergehen. Radiale Bereiche 59.1 und 59.2 im Übergang zwischen den Längsseitenflächen 58.1 und 58.2 des Fußabschnitts 56 zu den unteren Querseitenflächen 63.1 und 63.2 weisen unmittelbar anschließend an die minimale Breite b₃ einen Kerbradius von 0,8 mm und tangential stetig anschließend an diesen einen Kerbradius von 0,3 mm auf.

Beidseitig des pilzförmigen, durch Fußabschnitt 56 und Kopfteil 57 gebildeten Mittels sind jeweils ein Längsabschnitt 50.1 und 50.2 ausgebildet, deren Außenwandung 51.1 und 51.2 bündig in die Außenwandung 11 des Befestigungsmittels 10 übergeht. An ihrem dem männlichen Endabschnitt zuordbaren Ende weisen die Längsabschnitte 50.1 und 50.2 Aussparungen 53.1 und 53.2 auf, in welche Verlängerungsabschnitte 24.1 und 24.2 (siehe Fig. 2a) des männlichen Endabschnittes 14 eingreifen können. Hierdurch wird eine longitudinale Hinterschneidung 28 (siehe Fig. 2a) zur Verfügung gestellt. Vorsprünge 52.1 und 52.2 der Längsabschnitte 50.1 und 50.2, zugeordnet dem männlichen Endabschnitt 14, kommen in diesem in Aussparungen 25.1 und 25.2 zu liegen (siehe Fig. 2a).

Die Längsabschnitte 50.1 und 50.2 weisen minimale Breiten b₂₁ und b₂₂ auf. Diese minimalen Breiten b₂₁ und b₂₂ liegen nachfolgend zweiten inneren Querseitenflächen 65.1 und 65.2 innerhalb des äußeren Hinterschneidungsbereichs 27 und im Übergang zu zweiten inneren Längsseitenflächen 64.1 und 64.2 vor, wobei unmittelbar anschließend an die minimalen Breiten b₂₁ und b₂₂ ein Kerbradius von 0,8 mm und darin anschließend ein Kerbradius von 0,3 mm vorgesehen ist. Die zweiten inneren Querseitenflächen 65.1 und 65.2 gehen dann in die ersten inneren Seitenflächen 66.1 und 66.2 über.

Das Verhältnis der Breiten b₁: (b₂₁+b₂₂+b₃) beträgt etwa 0,87. Die minimale Querschnittsbreite des männlichen Endabschnitts 14 und die minimalen Querschnittsbreiten des weiblichen Endabschnitts 16 führen bei einem solchen Verhältnis zu einer Optimierung der Werte für Zugspannungen im zum Ring geschlossenen Befestigungsmittel.
Der äußere Hinterschneidungsbereich 26 des männlichen Endabschnitts 14 umfasst die Querseitenflächen 34.1 und 34.2 mit an diesen nach oben und unten in Längsrichtung des Befestigungsmittels 10 gesehen anschließenden radialen Bereichen. Der innere Hinterschneidungsbereich 36 wird gemäß Fig. 2b gebildet durch die unteren Querseitenflächen 63.1 und 63.2 und die an diesen anschließenden radialen Bereiche.

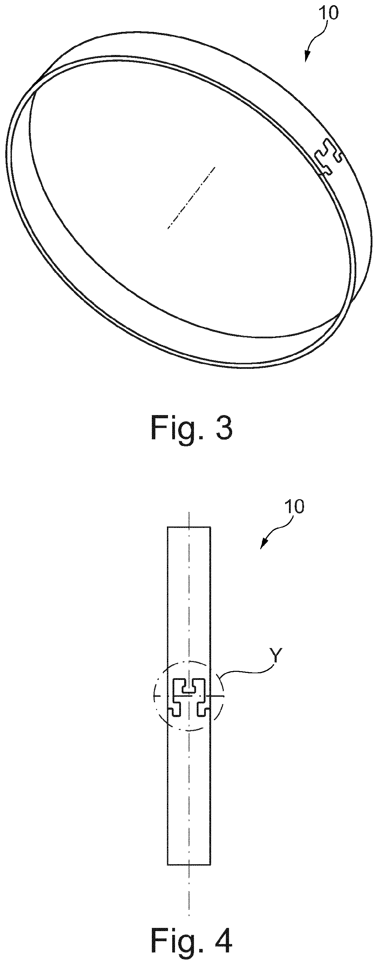

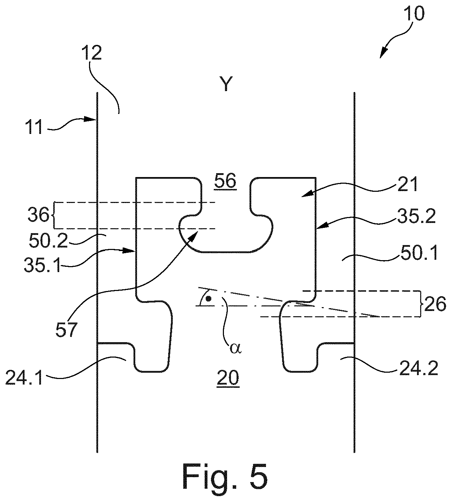

Fig. 3 zeigt die erste Ausführungsform des Befestigungsmittels 10, geformt als geschlossener Ring, in einer perspektivischen Ansicht. Fig. 4 zeigt demgegenüber eine Draufsicht auf einen geschlossenen Ring in einer zweiten Ausführungsform des Befestigungsmittels 10, wobei die Einzelheit Y in Fig. 5 gezeigt ist. Im Wesentlichen ist diese zweite Ausführungsform ähnlich ausgebildet wie die erste Ausführungsform gemäß den Fig. 1 bis 3, jedoch sind nunmehr die Längsseitenflächen 35.1 und 35.2 der Aufweitungsteile 32.1 und 32.2 des Kopfteils 21 exakt parallel zu einer Außenwandung 11 des Befestigungsmittels 10 ausgerichtet. Zudem beträgt ein Winkel a, der bestimmt ist durch die Querseitenflächen 34.1 und 34.2 und deren lineare Abschnitte einerseits und andererseits durch eine durch den Grund 22 des männlichen Endabschnittes 14 verlaufende Gerade oder eine Parallele hierzu, 10° und nicht 5° wie in der Ausführungsform gemäß Fig. 2a. Demgemäß beträgt der Wert für den spitzen Winkel W, der in Fig. 5 nicht eingezeichnet ist, bei dieser Ausführungsform etwa 80°, da der Winkel γ, der in Fig. 5 auch nicht eingezeichnet ist, ebenso wie bei der ersten Ausführungsform gemäß Fig. 2a 93° beträgt. Der spitze Winkel W kann jedoch zum Beispiel auch 70° betragen in einer Alternative zu der Ausführungsform gemäß Fig. 5. Fig. 5 zeigt in idealisierter Weise den Zusammenschluss des männlichen Endabschnittes 14 und des weiblichen Endabschnittes 16 am im zum Ring geschlossenen Befestigungsmittel 10. Tatsächlich wird durch den Einsatz der Biegewerkzeuge es jedoch zu geringfügigen Materialumformungen kommen, so dass die exakten geometrischen Werte, also die exakte Form des männlichen und des weiblichen Endabschnittes 14, 16 im geschlossenen Ring etwas abweichen von denjenigen des offenen Bandabschnittes, wie in den Fig. 1 und 2a/b gezeigt.

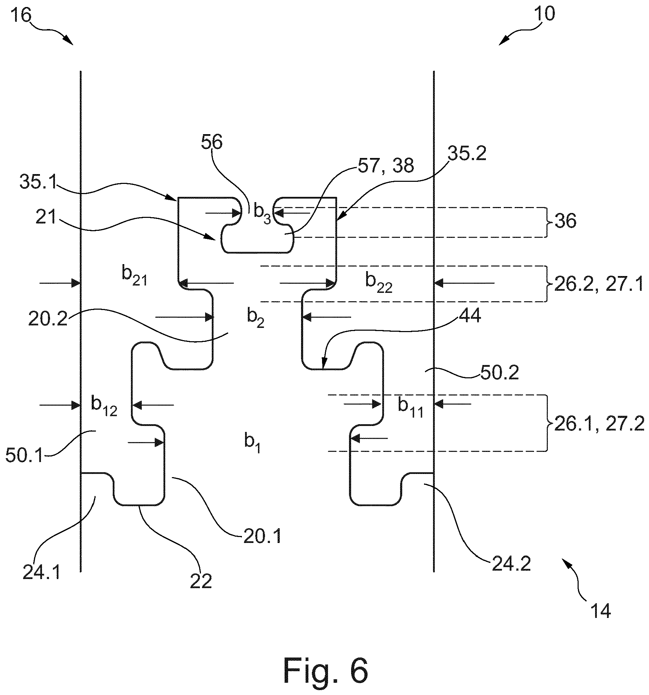

Fig. 6 zeigt schließlich eine dritte Ausführungsform des erfindungsgemäßen Befestigungsmittels 10 im geschlossenen, ringförmigen Zustand. Dabei sind in dieser Ausführungsform ein erster und ein zweiter äußerer Hinterschneidungsbereich 26.1 und 26.2 bezogen auf den männlichen Endabschnitt 14 und ein erster und ein zweiter äußerer Hinterschneidungsbereich 27.1 und 27.2 des weiblichen Endabschnitts 16 vorgesehen. Die Form des männlichen Endabschnitts 14 kann daher als baumartig angesprochen werden. Die minimale Breite b₂ eines zweiten männlichen Fußabschnittes 20.2 im zweiten Hinterschneidungsbereich 26.2 wird daher herangezogen, um für die zweite Stufe das Verhältnis b₂: (b₁₁+b₁₂) zu bestimmen, wobei b₁₁ und b₁₂ minimale Breiten von Längsabschnitten 50.1 und 50.2 des weiblichen Endabschnitts 16 in dessen zweitem äußeren Hinterschneidungsbereich 27.2 sind, so dass das Verhältnis bei etwa 0,8 liegt, wohingegen für die Bestimmung des Querschnittbreitenverhältnisses auf der ersten Stufe auf eine minimale Breite b₁ des männlichen Fußabschnitts 20.1 in dessen ersten Hinterschneidungsbereich 26.1 und auf Breiten b₂₁ und b₂₂ der seitlichen äußeren Längsabschnitte 50.1 und 50.2 des weiblichen Endabschnitts 16 in dessen erstem Hinterschneidungsbereich 27.1 als auch auf eine minimale Breite b₃ des inneren Hinterschneidungsbereichs 36 abgestellt wird, und das dortige Verhältnis b₁: (b₂₁+b₂₂+b₃) etwa 0,8 beträgt. Aufgrund der Vorsehung zweier äußerer Hinterschneidungsbereiche 26.1 und 26.2 beziehungsweise 27.1 und 27.2 weist die dritte Ausführungsform gemäß Fig. 6 hervorragende Werte für die statische Zugdehnung auf. Nachfolgend dem ersten Hinterschneidungsbereich 26.1 ist dann wiederum ein longitudinaler Hinterschneidungsbereich aufgrund der trogartigen Ausbildung 44 vorgesehen, wie dieser durch die Vorsprünge 24.1 und 24.2 beispielsweise in der ersten Ausführungsform gemäß Fig. 2a zur Verfügung gestellt ist. Zusätzlich sind jedoch auch noch entsprechende Vorsprünge 24.1 und 24.2 am Grund 22 vorgesehen. Im Übrigen ist der obere Teil mit der Ausnehmung 38 identisch ausgebildet wie in der zweiten Ausführungsform gemäß den Fig. 4 und 5. Würde man zwei innere Hinterschneidungsbereiche vorsehen wollen, so würde baumartig eine Ausnehmung 38 in dem Abschnitt benachbart oder ein Fuß 20.1 ebenfalls vorgesehen werden.

Mit dem erfindungsgemäßen Befestigungsmittel wird ein solches zur Verfügung gestellt, welches im Hinblick auf die Zug- und Biegebelastung verbesserte Werte liefert, so dass letztendlich Spaltöffnungen insbesondere im Betrieb vermieden und dadurch die Lebensdauer des erfindungsgemäßen Befestigungsmittels erheblich verlängert wird.

## Patentansprüche

1. Befestigungsmittel (10), insbesondere für Bälge, mit einem männlichen und einem hierzu komplementären weiblichen Endabschnitt (14, 16), wobei der weibliche Endabschnitt (16) einen Grund (54) umfasst, an welchem ein dort etwa mittig angeordneter Fußabschnitt (56) angeordnet ist, an dem ein Kopfteil (57) angeordnet ist, welches eine Außenkontur des Fußabschnitts (56) seitlich überragt und quer zu einer Längsrichtung des Befestigungsmittels (10) ausgebildete untere Seitenflächen (63.1, 63.2) zur Bildung mindestens eines inneren Hinterschneidungsbereichs (36) in einer Ausnehmung (38) des männlichen Endabschnittes (14) umfasst, wobei beidseitig des Fußabschnittes (56) je ein äußerer Längsabschnitt (50.1, 50.2) angeordnet ist, dessen Außenwandung (51.1, 51.2) bündig in eine Außenwandung (11) des Befestigungsmittels (10) übergeht, und wobei das Kopfteil (57) von den beiden äußeren Längsabschnitten (50.1, 50.2) in einer Längsrichtung des Befestigungsmittels (10) überragt ist.

2. Befestigungsmittel gemäß Anspruch 1, **dadurch gekennzeichnet, dass** der Fußabschnitt (56) ausgehend vom Grund (54) sich verjüngend bis zu einer minimalen Breite b₃ ausgebildet ist.

3. Befestigungsmittel gemäß einem der vorhergehenden Ansprüche, **dadurch gekennzeichnet, dass** ein Übergangswinkel β zwischen Grund (54) und Fußabschnitt (56) in einem Bereich von etwa 91 ° bis etwa 110° liegt.

4. Befestigungsmittel gemäß einem der vorhergehenden Ansprüche, **dadurch gekennzeichnet, dass** zwischen Längsseitenflächen (58.1, 58.2) des Fußabschnitts (56) und den unteren Seitenflächen (63.1, 63.2) des Kopfteils (57) radiale Bereiche (59.1, 59.2) mit Kerbradien von mindestens etwa 0,3 mm angeordnet sind.

5. Befestigungsmittel gemäß einem der vorhergehenden Ansprüche, **dadurch gekennzeichnet, dass** Seitenflächen (62.1, 62.2) des Kopfteils (57) zumindest teilweise gekrümmt mit Kerbradien von mindestens etwa 0,3 mm ausgebildet sind.

6. Befestigungsmittel gemäß einem der vorhergehenden Ansprüche, **dadurch gekennzeichnet, dass** eine Kopfseitenfläche (60) des Kopfteils (57) in mindestens einem Teilbereich in etwa parallel zu dem Grund (54) ausgebildet ist.

7. Befestigungsmittel gemäß einem oder mehreren der vorangehenden Ansprüche, **dadurch gekennzeichnet, dass** die Längsabschnitte (50.1, 50.2) in ihrem dem männlichen Endabschnitt (14) zuordbaren Ende Aussparungen (53.1, 53.2) aufweisen, in welchen Verlängerungsabschnitte (24.1, 24.2) des männlichen Endabschnitts (14) anordbar sind.

8. Befestigungsmittel gemäß einem der vorhergehenden Ansprüche, **dadurch gekennzeichnet, dass** der männliche Endabschnitt (14) neben dem inneren Hinterschneidungsbereich (36) mindestens einen äußeren Hinterschneidungsbereich (26) umfasst.

9. Befestigungsmittel gemäß einem der vorgehergehenden Ansprüche, **dadurch gekennzeichnet, dass** der männliche Endabschnitt (14) einen Fußabschnitt (20) umfasst, der ausgehend von einem Grund (22) sich verjüngend bis zu einer minimalen Breite b₁ ausgebildet ist.

10. Befestigungsmittel gemäß einem der vorhergehenden Ansprüche, **dadurch gekennzeichnet, dass** ein Übergangswinkel γ zwischen dem Grund (22) und dem Fußabschnitt (20) des männlichen Endabschnitts (14) in einem Bereich von etwa 90,5° bis etwa 110° liegt.

11. Befestigungsmittel gemäß einem der vorhergehenden Ansprüche, **dadurch gekennzeichnet, dass** am vom Grund (22) wegweisenden Ende des Fußabschnitts (20) ein Kopfteil (21) mit Aufweitungsteilen (32.1, 32.2) angeordnet ist, die den inneren Hinterschneidungsbereich (36) ausbilden.

12. Befestigungsmittel gemäß Anspruch 11, **dadurch gekennzeichnet, dass** die Aufweitungsteile (32.1, 32.2) Querseitenflächen (34.1, 34.2) zur Ausbildung des mindestens einen äußeren Hinterschneidungsbereichs (26) umfassen.

13. Befestigungsmittel gemäß Anspruch 12, **dadurch gekennzeichnet, dass** die Querseitenflächen (34.1, 34.2) mit Längsseitenflächen (30.1, 30.2) des Fußabschnitts (20) einen spitzen Winkel W in einem Bereich von etwa 45° bis etwa 88° bilden.

14. Befestigungsmittel gemäß einem der Ansprüche 12 bis 13, **dadurch gekennzeichnet, dass** im Bereich zwischen Längsseitenflächen (30.1, 30.2) des Fußabschnitts (20) und Querseitenflächen (34.1, 34.2) der Aufweitungsteile (32.1, 32.2) Kerbradien von mindestens 0,3 mm angeordnet sind.

15. Befestigungsmittel gemäß einem der Ansprüche 11 bis 14, **dadurch gekennzeichnet, dass** Seitenflächen (35.1, 35.2) der Aufweitungsteile (32.1, 32.2) in etwa parallel zu der Außenwandung (11) des Befestigungsmittels (10) ausgebildet sind.

16. Befestigungsmittel gemäß einem der Ansprüche 11 bis 15, **dadurch gekennzeichnet, dass** zwischen den Aufweitungsteilen (32.1, 32.2) eine Ausnehmung (38) ausgebildet ist, die komplementär zu dem am Grund (54) des weiblichen Endabschnitts (16) angeordneten Fußabschnitt (56) mit Kopfteil (57) ausgebildet ist.

17. Befestigungsmittel gemäß einem der vorhergehenden Ansprüche, **dadurch gekennzeichnet, dass** eine Länge l des Fußabschnitts (20) und des Kopfteils (21) mit den Aufweitungsteilen (32.1, 32.2) kürzer ist als eine Breite b des Befestigungsmittels (10).

18. Befestigungsmittel gemäß einem der vorhergehenden Ansprüche, **dadurch gekennzeichnet, dass** minimale Breiten b₂₁ und b₂₂ beider äußerer Längsabschnitte (50.1, 50.2) und die minimale Breite b₃ des Fußabschnitts (56) des weiblichen Endabschnitts (16) derart gewählt sind, dass diese zu der minimalen Breite b₁ des Fußabschnitts (20) des männlichen Endabschnitts (14), oder bei Vorliegen einer Ausnehmung (38), die in einer Längsrichtung des Befestigungsmittels (10) über den Grund (22) hinaus verschoben angeordnet ist, zu minimalen Breiten b₁₁ und b₁₂ von Längsabschnitten (18.1, 18.2) im Bereich der Ausnehmung (38), in einem Verhältnis b₁: (b₂₁ + b₂₂+b₃) bzw. (b₁₁+b₁₂) : (b₂₁ + b₂₂+b₃) von etwa 0,79 bis etwa 1,27 stehen.

19. Befestigungsmittel gemäß einem der vorhergehenden Ansprüche, **dadurch gekennzeichnet, dass** dieses bandförmig ausgebildet ist.

20. Befestigungsmittel gemäß einen der vorhergehenden Ansprüche, **dadurch gekennzeichnet, dass** dieses zu einem Ring schließbar ist, in dem der männliche und der weibliche Endabschnitt (14, 16) miteinander verbunden sind.

21. Verwendung eines Befestigungsmittels (10) gemäß einem der Ansprüche 1 bis 20 zur Befestigung von Bälgen auf Gelenkgehäusen und/oder Wellen.

22. System, umfassend ein Befestigungsmittel (10) gemäß einem der Ansprüche 1 bis 20 und einen Balg.

## Claims

1. Fastening means (10), in particular for bellows, comprising a male end segment (14) and a female end segment (16) complementary to the male end segment (14), wherein the female end segment (16) comprises a base (54) on which a foot segment (56) is arranged approximately centrally there, on which a head part (57) is arranged that projects laterally over an outer contour of the foot segment (56) and comprises lower lateral surfaces (63.1, 63.2) being formed transverse to a length direction of the fastening means (10), for forming at least one inner undercut region (36) in a recess (38) of the male end segment (14), wherein an outer longitudinal segment (50.1, 50.2) whose outer wall (51.1, 51.2) merges flush into an outer wall (11) of the fastening means (10), is arranged on each of both sides of the foot segment (56), and wherein the two outer longitudinal segments (50.1, 50.2) project beyond the head part (57) in a length direction of the fastening means (10).

2. Fastening means according to claim 1, **characterized in that** the foot segment (56) is formed proceeding from the base (54) tapering to a minimum width b₃.

3. Fastening means according to one of the preceding claims, **characterized in that** a transition angle β between base (54) and foot segment (56) is in a range from about 91° to about 110°.

4. Fastening means according to one of the preceding claims, **characterized in that** radial regions (59.1, 59.2) having notch radii of at least about 0.3 mm are arranged between lateral longitudinal surfaces (58.1, 58.2) of the foot segment (56) and the lower lateral surfaces (63.1 63.2) of the head part (57).

5. Fastening means according to one of the preceding claims, **characterized in that** at least parts of the lateral surfaces (62.1, 62.2) of the head part (57) are formed curved with notch radii of at least about 0.3 mm.

6. Fastening means according to one of the preceding claims, **characterized in that** a lateral head surface (60) of the head part (57) is formed in at least one sub-region approximately parallel to the base (54).

7. Fastening means according to one ore more of the preceding claims, **characterized in that** in their ends that may be associated with the male end segment (14), the longitudinal segments (50.1, 50.2) have recesses (53.1, 53.2) in which lengthening segments (24.1, 24.2) of the male end segment (14) may be arranged.

8. Fastening means according to one of the preceding claims, **characterized in that** besides the inner undercut region (36), the male end segment (14) comprises at least one outer undercut region (26).

9. Fastening means according to one of the preceding claims, **characterized in that** the male end segment (14) comprises a foot segment (20) which is formed proceeding from the base (22) tapering to a minimum width b₁

10. Fastening means according to one of the preceding claims, **characterized in that** a transition angle γ between the base (22) and the foot segment (20) of the male end segment (14) is in a range from about 90.5° to about 110°.

11. Fastening means according to one of the preceding claims, **characterized in that** at the end of the foot segment (20) facing away from the base (22), a head part (21) with extension parts (32.1, 32.2) is arranged which form the inner undercut region (36).

12. Fastening means according to claim 11, **characterized in that** the extension parts (32.1, 32.2) comprise lateral transverse surfaces (34.1, 34.2) for forming the at least one outer undercut region (26).

13. Fastening means according to claim 12, **characterized in that** the lateral transvers surfaces (34.1, 34.2) form an acute angle W in a range from about 45° to about 88° with lateral longitudinal surfaces (30.1, 30.2) of the foot segment (20).

14. Fastening means according to either of claims 12 or 13, **characterized in that** notch radii of at least 0.3 mm are arranged in the region between the lateral longitudinal surfaces (30.1, 30.2) of the foot segment (20) and lateral transverse surfaces (34.1, 34.2) of the extension parts (32.1, 32.2).

15. Fastening means according to one of claims 11 through 14, **characterized in that** the lateral surfaces (35.1, 35.2) of the extension parts (32.1, 32.2) are formed approximately parallel to the outer wall (11) of the fastening means (10).

16. Fastening means according to any of claims 11 through 15, **characterized in that** between the extension parts (32.1, 32.2) a recess (38) is formed that is complementary to the foot segment (56) with head part (57) arranged on the base (54) of the female end segment (16).

17. Fastening means according to one of the preceding claims, **characterized in that** a length I of the foot segment (20) and of the head part (21) with the extension parts (32.1, 32.2) is shorter than a width b of the fastening means (10).

18. Fastening means according to one of the preceding claims, **characterized in that** minimum widths b₂₁ and b₂₂ of both outer longitudinal segments (50.1, 50.2) and the minimum width b₃ of the foot segment (56) of the female end segment (16) are selected such that they are at a ratio b₁ : (b₂₁ + b₂₂+b₃) or (b₁₁+b₁₂) : (b₂₁ + b₂₂+b₃) of about 0.79 to about 1.27 to the minimum width b₁ of the foot segment (20) of the male end segment (14), or if there is a recess (38) that is arranged displaced beyond the base (22) in a length direction of the fastening means (10), to the minimum widths b₁₁ and b₁₂ of longitudinal segments (18.1, 18.2) in the region of the recess (38).

19. Fastening means according to one of the preceding claims, **characterized in that** it is formed ribbon-like.

20. Fastening means according to one of the preceding claims, **characterized in that** it may be closed to create a ring in which the male and the female end segments (14, 16) are connected to one another.

21. Use of a fastening means (10) according to one of claims 1 through 20 for fastening bellows to joint housings and/or shafts.

22. System, comprising a fastening means (10) according to one of the claims 1 through 20 and a bellows.

## Revendications

1. Moyen de fixation (10), en particulier pour soufflets, présentant une section d'extrémité mâle et une section d'extrémité femelle complémentaire (14, 16), la section d'extrémité femelle (16) comprenant un fond (54) sensiblement au milieu duquel est disposée une section formant pied (56) sur laquelle est placée une partie formant tête (57) qui dépasse latéralement un contour extérieur de la section formant pied (56) et comprend des surfaces latérales inférieures (63.1, 63.2) configurées perpendiculairement à une direction longitudinale du moyen de fixation (10) pour former au moins une zone de contre-dépouille intérieure (36) dans une cavité (38) de la section d'extrémité mâle (14), une section longitudinale extérieure (50.1, 50.2) dont la paroi extérieure (51.1, 51.2) se prolonge dans une paroi extérieure (11) du moyen de fixation (10), étant située de part et d'autre de la section formant pied (36), la partie formant tête (57) étant dépassée par les deux sections longitudinales extérieures (50.1, 50.2) dans une direction longitudinale du moyen de fixation (10).

2. Moyen de fixation selon la revendication 1, **caractérisé en ce que** la section formant pied (56) se rétrécit à partir du fond (54) jusqu'à une largeur minimale b₃.

3. Moyen de fixation selon une des revendications précédentes, **caractérisé en ce qu'**un angle de transition β entre le fond (54) et la section formant pied (56) est situé sur une plage d'environ 91° à environ 110°.

4. Moyen de fixation selon une des revendications précédentes, **caractérisé en ce qu'**entre des surfaces latérales longitudinales (58.1, 58.2) de la section formant pied (56) et les surfaces latérales inférieures (63.1, 63.2) de la partie formant tête (57) se trouvent des zones radiales (59.1, 59.2) ayant des rayons d'entaille d'au moins 0,3 mm.

5. Moyen de fixation selon une des revendications précédentes, **caractérisé en ce que** des surfaces latérales (62.1, 62.2) de la partie formant tête (57) sont au moins partiellement courbées avec des rayons d'entaille d'au moins 0,3 mm.

6. Moyen de fixation selon une des revendications précédentes, **caractérisé en ce qu'**une surface latérale de tête (60) de la partie formant tête (57) est sensiblement parallèle au fond (54) dans au moins une zone partielle.

7. Moyen de fixation selon une ou plusieurs des revendications précédentes, **caractérisé en ce que** les sections longitudinales (50.1, 50.2) présentent à leur extrémité pouvant être associée à la section d'extrémité mâle (14) des cavités (53.1, 53.2) dans lesquelles des sections de prolongement (24.1, 24.2) de la section d'extrémité mâle (14) peuvent être placées.

8. Moyen de fixation selon une des revendications précédentes, **caractérisé en ce que** la section d'extrémité mâle (14) comprend au moins une zone de contre-dépouille extérieure (26) à proximité de la zone de contre-dépouille intérieure (36).

9. Moyen de fixation selon une des revendications précédentes, **caractérisé en ce que** la section d'extrémité mâle (14) comprend une section formant pied (20) se rétrécit à partir d'un fond (22) jusqu'à une largeur minimale b₁.

10. Moyen de fixation selon une des revendications précédentes, **caractérisé en ce qu'**un angle de transition γ entre le fond (22) et la section formant pied (20) de la section d'extrémité mâle (14) est situé sur une plage d'environ 90,5° à environ 110°.

11. Moyen de fixation selon une des revendications précédentes, **caractérisé en ce qu'**à l'extrémité de la section formant pied (20) opposée au fond (22) est située une partie formant tête (21) dotée de parties d'élargissement (32.1, 32.2) qui forment la zone de contre-dépouille intérieure (36).

12. Moyen de fixation selon la revendication 11, **caractérisé en ce que** les parties d'élargissement (32.1, 32.2) comprennent des surfaces latérales transversales (34.1, 34.2) pour former l'au moins une zone de contre-dépouille extérieure (26).

13. Moyen de fixation selon la revendication 12, **caractérisé en ce que** les latérales transversales (34.1, 34.2) forment avec des surfaces latérales longitudinales (30.1, 30.2) de la section formant pied (20) un angle aigu W situé sur une plage d'environ 45° à environ 88°.

14. Moyen de fixation selon une des revendications 12 et 13, **caractérisé en ce que** dans la zone située entre les surfaces latérales longitudinales (30.1, 30.2) de la section formant pied (20) et les surfaces latérales transversales (34.1, 34.2) des parties d'élargissement (32.1, 32.2) se trouvent des rayons d'entaille d'au moins 0,3 mm.

15. Moyen de fixation selon une des revendications 11 à 14, **caractérisé en ce que** des surfaces latérales (35.1, 35.2) des parties d'élargissement (32.1, 32.2) sont formées sensiblement parallèlement à la paroi extérieure (11) du moyen de fixation (10).

16. Moyen de fixation selon une des revendications 11 à 15, **caractérisé en ce qu'**entre les parties d'élargissement (32.1, 32.2) est formée une cavité (38) qui est complémentaire de la section formant pied (56) dotée d'une partie formant tête (57) disposée sur le fond (54) de la section d'extrémité femelle (16).

17. Moyen de fixation selon une des revendications précédentes, **caractérisé en ce qu'**une longueur l de la section formant pied (20) et de la partie formant tête (21) avec les parties d'élargissement (32.1, 32.2) est plus courte d'une largeur b du moyen de fixation (10).

18. Moyen de fixation selon une des revendications précédentes, **caractérisé en ce que** les largeurs minimales b₂₁ et b₂₂ des deux sections longitudinales extérieures (50.1, 50.2) et la largeur minimale b₃ de la section formant pied (56) de la section d'extrémité femelle (16) sont choisies de sorte qu'elles se trouvent, par rapport à la largeur minimale b₁ de la section formant pied (20) de la section d'extrémité mâle (14) ou, en présence d'une cavité (38) qui est déplacée dans une direction longitudinale du moyen de fixation (10) au-delà du fond (22), par rapport aux largeurs minimales b₁₁ et b₁₂ des sections longitudinales (18.1, 18.2) dans la zone de la cavité (38), dans un rapport b₁ : (b₂₁ + b₂₂ +b₃) ou (b₁₁ + b₁₂) : (b₂₁ + b₂₂ + b₃) d'environ 0,79 à environ 1,27.

19. Moyen de fixation selon une des revendications précédentes, **caractérisé en ce qu'**il est configuré en forme de bande.

20. Moyen de fixation selon une des revendications précédentes, **caractérisé en ce qu'**il peut être fermé pour former un anneau dans lequel les sections d'extrémité mâle et femelle (14, 16) peuvent être reliées l'une avec l'autre.

21. Utilisation d'un moyen de fixation (10) selon une des revendications 1 à 20 pour fixer des soufflets sur des boîtes de transmission et/ou des arbres.

22. Système comprenant un moyen de fixation (10) selon une des revendications 1 à 20 et un soufflet.
